(19) Europäisches Patentamt
European Patent Office
Office européen des brevets

(11) **EP 3 268 695 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **15804097.2**

(22) Anmeldetag: **27.11.2015**

(51) Int Cl.:
***G01C 19/5776*** *(2012.01)*

(86) Internationale Anmeldenummer:
**PCT/EP2015/077952**

(87) Internationale Veröffentlichungsnummer:
**WO 2016/142015 (15.09.2016 Gazette 2016/37)**

(54) **VORRICHTUNG UND VERFAHREN ZUR RESTWERTVERARBEITUNG BEI DER ANSTEUERUNG EINES SENSORS**

DEVICE AND METHOD FOR PROCESSING RESIDUAL VALUES WHEN CONTROLLING A SENSOR

DISPOSITIF ET MÉTHODE POUR TRAITEMENT DE VALEURS RÉSIDUELS EN CONTRÔLANT UN CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2015 DE 102015003196**

(43) Veröffentlichungstag der Anmeldung:
**17.01.2018 Patentblatt 2018/03**

(73) Patentinhaber: **Northrop Grumman LITEF GmbH 79115 Freiburg (DE)**

(72) Erfinder:
• **SPAHLINGER, Günter 70188 Stuttgart (DE)**
• **ZIMMERMANN, Steffen 79331 Teningen (DE)**

(74) Vertreter: **Müller Hoffmann & Partner Patentanwälte mbB St.-Martin-Strasse 58 81541 München (DE)**

(56) Entgegenhaltungen:
**DE-A1-102010 061 756**

• **BOSER B E ET AL: "A Fourth-Order<tex>$SigmaDelta$</tex>Interfa ce for Micromachined Inertial Sensors", IEEE JOURNAL OF SOLID-STATE CIRCUITS, IEEE SERVICE CENTER, PISCATAWAY, NJ, USA, Bd. 40, Nr. 8, 1. August 2005 (2005-08-01) , Seiten 1602-1609, XP011136744, ISSN: 0018-9200, DOI: 10.1109/JSSC.2005.852025**

EP 3 268 695 B1

**Beschreibung**

Die Erfindung bezieht sich auf eine Vorrichtung zur Restwertverarbeitung und ein Verfahren zur Restwertverarbeitung.

Die heutige Technik ist in vielen Bereichen auf hochgenaue Sensoren angewiesen. Diese nehmen typischerweise Messdaten mittels der Messung einer Abweichung eines Messfühlers von einer Ruhe- oder Rückstellposition auf. So werden in mechanischen Sensoren die Spannung oder Verdrillung einer Feder, die durch eine Positions- oder Ausrichtungsänderung des Messfühlers hervorgerufen wird, gemessen und davon ausgehend die gewünschten Messdaten ermittelt. In kapazitiven Sensoren führt die Positionsänderung des Messfühlers zu einer Änderung der Kapazität zwischen dem Messfühler und einer Probemasse. Diese kann gemessen und daraus der gewünschte Messwert ermittelt werden.

Die DE 10 2010 061 756 A1 offenbart eine Vorrichtung zum Ansteuern eines Sensors, mit einer Wandlereinheit zum Umwandeln eines Eingangssignals in ein Steuersignal zum Steuern des Sensors, einer Vergleichseinheit zum Bestimmen eines Differenzsignals, das die Differenz zwischen dem Eingangssignal und dem Steuersignal angibt, und einer Reglereinheit zum Regeln mittels des Differenzsignals, wobei die Reglereinheit eine Übertragungsfunktion durch Verarbeiten des Differenzsignals erzeugt und die Betriebsfrequenz des Sensors ungleich Null ist.

Um einen hochgenauen Sensor bereitzustellen ist es deshalb notwendig, sowohl die Position des Messfühlers vor der Messung als auch während der Messung genau zu bestimmten. Idealerweise kehrt das Messsystem nach der Messung in einen Ruhezustand zurück, in dem sich der Messfühler in einer genau definierten Rückstellposition befindet.

Je nach Aufbau des Messsystems kann es aber eine geraume Zeit dauern, bis das Messsystem in den Ruhezustand zurückkehrt. Insbesondere wenn der Messfühler nach der Messung Schwingungen mit geringer Dämpfung ausführt, kann es lange dauern bis er sich wieder in der Rückstellposition befindet. Eine genaue Messung ist während dieser Zeit nicht möglich, da die Position des Fühlers nicht genau bekannt ist.

Des Weiteren ist es möglich, dass sich ein Messfühler eines Messsystems durch ungewollte Erschütterungen von seiner Rückstellposition entfernt. Auch dies kann die Genauigkeit von Messungen einschränken.

Es ist deshalb notwendig, sicherzustellen, dass sich der Messfühler vor Beginn einer Messung in der Rückstellposition befindet. Dies wird gewöhnlicher Weise durch eine Rückstellkraft bewirkt, die den Bewegungen des Messfühlers entgegenwirkt und so ein rasches Einschwingen auf die Rückstellposition bewirkt.

Für einige Sensortypen, wie zum Beispiel für rückgestellte Drehratensensoren, muss eine zeitlich veränderliche Rückstellkraft auf die Messfühler wirken. In Drehratensensoren ist dies notwendig, um eine Auslenkung durch die Corioliskraft zu kompensieren. Die Rückstellkraft ist dann typischerweise eine Schwingung mit einer bestimmten Betriebs- und/oder Eigenkreisfrequenz $\omega_0$ und einer bestimmten Amplitude. Deshalb muss der Drehratensensor auch mit einer deutlich von Null verschiedenen Frequenz angesteuert werden, um ein Einschwingen auf die Kreisfrequenz $\omega_0$ mit einer bestimmten Amplitude zu gewährleisten.

Idealerweise werden in kapazitiven Sensoren die Messfühler oder Probemassen mit genau der gewünschten (z.B. berechneten) Kraft angesteuert oder zurückgestellt. Die Kraft wird dabei über Spannungen an Elektroden aufgebracht, die zu elektrostatischen Kräften führen. Zum Beispiel werden zwei Elektroden verwendet, also zwei Spannungen bereitgestellt, die dann über das sich ausbildende elektrische Feld zwischen den Elektroden eine Kraft K zwischen den Elektroden erzeugen. Die Größe der Kraft K ergibt sich zu K = C $U^2$/d, wobei C die Kapazität zwischen den Elektroden, U die angelegte Spannung und d der Abstand der Elektroden ist. Daraus folgt, dass zur Erzeugung einer bestimmten Kraft K die angelegte Spannung proportional zur Wurzel aus K sein muss.

Dabei kann die Rückstellkraft zum Beispiel mittels zweier gegenüberliegender Elektrodenpaare erzeugt werden, d.h. die Rückstellkraft ergibt sich aus deren gemeinsamer Wirkung. Zum Beispiel kann man das erste Elektrodenpaar mit der Spannung $U_1 = U_0 \sqrt{f + \dfrac{F}{2}}$ und das zweite Elektrodenpaar mit der Spannung $U_2 = U_0 \sqrt{f - \dfrac{F}{2}}$ beaufschlagen. Dies führt bei gleicher Kapazität C und gleichem Abstand zwischen den Elektroden zu einer Gesamtkraft K = C/d ($U_1^2$ - $U_2^2$) = C/d $U_0^2$ F. Über den Wert F lässt sich somit die Rückstellkraft einstellen. $f$ ist ein freier Parameter, der zu anderen Zwecken genutzt werden kann.

Die zum jeweiligen Rückstellen benötigte Kraft wird oft digital berechnet und muss zur Anwendung auf den Messfühler in ein analoges Signal umgewandelt werden. In der Realität entstehen an den Übergängen von der z.B. digital berechneten Kraft zu den analogen physikalischen Spannungen Fehler durch die Umwandlung in Digital/Analog-Wandlern, auch "Quantisierung" genannt. Insbesondere entstehen die nichtidealen "quantisierten" Signale, z.B. durch die oben dargestellte Verwendung von Wurzelfunktionen und deren Berechnungen und/oder Digitalwandler mit endlicher Wortbreite (z.B. 16 bit).

Diese durch die Quantisierung entstehenden Fehler können sich in vielfältiger Art und Weise störend auf die Sensorsystemeigenschaften auswirken, deshalb ist eine sogenannte "Restwertverarbeitung" nötig, bei der der Quantisierungsfehler bestimmt wird und durch Zurückführen des Fehlers in das Sensorsystem versucht wird, den Fehler im relevanten Frequenzband zu minimieren.

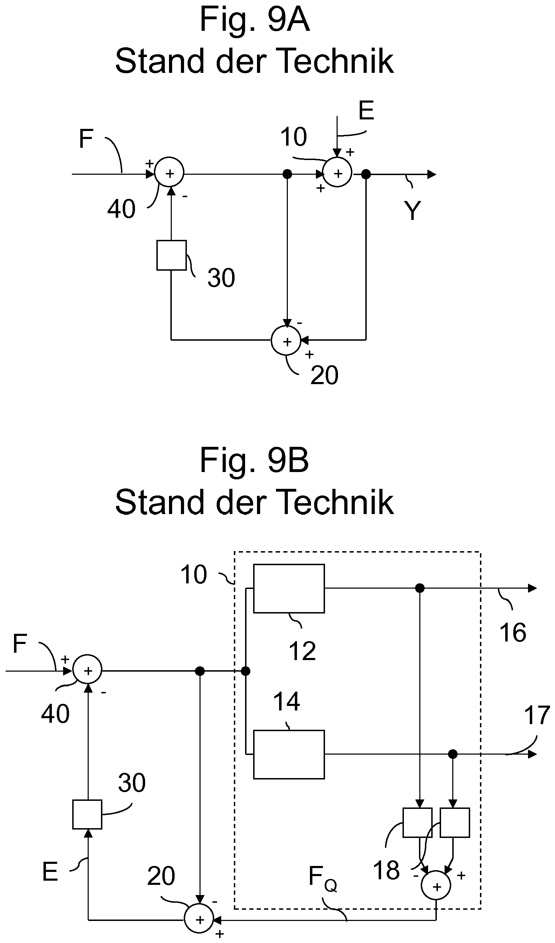

Nach dem Stand der Technik wird dies mittels des in Fig. 9A schematisch dargestellten Regelkreises erreicht. In der folgenden Beschreibung wird der Zeitbezug der in Fig. 9A gezeigten Signale F, E und Y durch tiefgestellte Zeitangaben gebildet. Signale, die zum Zeitpunkt "t" betrachtet werden, werden also mit einem tiefgestellten "t" bezeichnet.

Zu dem zum Zeitpunkt t eingehenden Signal $F_t$ wird in erster Iteration durch die Quantisierung am Digital/Analog-Wandler 10 der Quantisierungsfehler $E_t$ addiert. Das quantisierte Signal $Y_t$ wird zur Rückstellung und/oder Steuerung des Sensorsystems benutzt. Der unbekannte Fehler $E_t$ wird durch den Vergleich des Eingangssignals $F_t$ mit dem quantisierten Signal $Y_t$ in einer Vergleichseinheit 20 bestimmt und in einem Register 30 gespeichert.

Im nächsten Zeitschritt wird der im Register 30 gespeicherte Fehler $E_t$ durch einen Differenzbilder 40 vom Eingangssignal abgezogen. Es wird also die Differenz des Eingangssignals $F_{t+T}$ zum Zeitpunkt (t+T) und dem Fehler $E_t$ im Zeitpunkt t gebildet. T ist hierbei die Samplingrate des Eingangssignals F. Das Ausgangssignal $Y_{t+T}$ ist also folglich

$$Y_{t+T} = F_{t+T} + E_{t+T} - E_t.$$

Bildet man hiervon die z-Transformierte so ergibt sich (mit $z = e^{i\omega T}$)

$$Y(z) = F(z) + E(z)\,(1 - z^{-1}).$$

Die Übertragungsfunktion $G_E(z)$ des Differenzsignals (d.h. Fehlersignals) E(z) zum Ausgang Y(z) ist also

$$G_E(z) = E(z)\,(1 - z^{-1})/E(z) = 1 - z^{-1}.$$

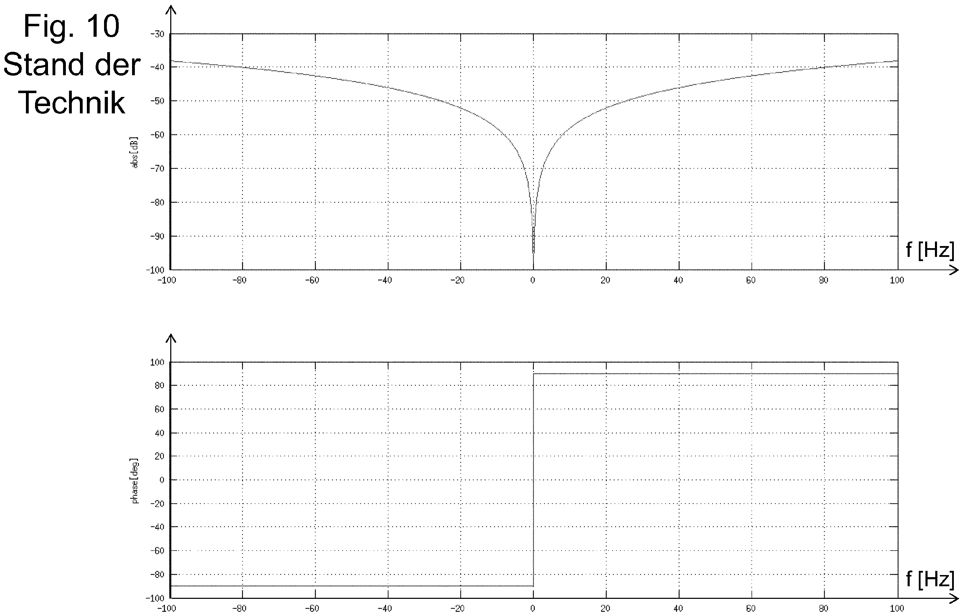

Der Betrag dieser Übertragungsfunktion ist in Fig. 10 oben gezeigt, ihre Phase (oder Argument) unten. Die Übertragungsfunktion hat eine Nullstelle bei $\omega = 0$, da hier z = 1 ist.

Fig. 9B stellt schematisch eine konkrete Ausführungsform des in Fig. 9A schematisch dargestellten Regelkreises nach dem Stand der Technik dar. Insbesondere weist der Digital/Analog-Wandler 10 zwei Wurzelberechner 12 und 14 auf, die die Wurzeln $\sqrt{f + \dfrac{F}{2}}$ und $\sqrt{f - \dfrac{F}{2}}$ bilden und in analoge Steuersignale 16, 17 umwandeln. In Quadriereinheiten 18 werden diese Wurzeln wieder quadriert und hierauf ihre Differenz gebildet, um das quantisierte Signal $F_Q$ zu erzeugen, das letztlich einer skalierten Kopie der am Sensor entstehenden Kraft entspricht.

Wie mit Bezug auf Fig. 9A beschrieben wird hieraus der Fehler E in der Vergleichseinheit 20 bestimmt, im Register 30 gespeichert und im nächsten SamplingSchritt durch den Differenzbilder 40 vom Eingangssignal F abgezogen.

Durch die Nullstelle bei $\omega = 0$ eignet sich dieser Aufbau insbesondere für Sensoren, deren Bestandteile mit einem nahezu konstanten oder sich sehr langsam verändernden Signal (d.h. $\omega \approx 0$) gesteuert werden. Dies ist aber nur bei einigen Sensoren der Fall.

Insbesondere weist, wie oben beschrieben, für Drehratensensoren die Rückstellkraft ein Schwingungsverhalten mit einer bestimmten Betriebs- oder Eigenkreisfrequenz $\omega_0$ auf. Dann muss der Drehratensensor auch mit einer deutlich von Null verschiedenen Frequenz angesteuert werden. Wie in Fig. 10 dargestellt, ist die Übertragungsfunktion $G_E$ des Quantisierungsfehlers E für solche Frequenzen ungleich null. Das heißt, in diesen Bereichen ist mit großen Fehlern aufgrund von Quantisierungseffekten zu rechnen. Dies führt zu einer ungenauen Ansteuerung des Sensors und damit zu einer Einschränkung der Genauigkeit des Sensors.

Der Erfindung liegt die Aufgabe zugrunde, eine Vorrichtung zur Restwertverarbeitung anzugeben, die bei einer Betriebs- und/oder Resonanzkreisfrequenz $\omega_0$ eines zu steuernden Sensors keinen Quantisierungsfehler aufweist. Es ist des Weiteren erstrebenswert ein entsprechendes Verfahren anzugeben.

Dies wird durch den Gegenstand der unabhängigen Patentansprüche erreicht. Vorteilhafte Weiterbildungen ergeben sich aus den jeweiligen Unteransprüchen. Es wird eine Vorrichtung zum Ansteuern eines Sensors nach Anspruch 1 angegeben.

Des Weiteren werden die oben genannten Aufgaben durch ein Verfahren zum Ansteuern eines Sensors erreicht mit den Schritten: Umwandeln eines Eingangssignals in ein Steuersignal zum Steuern des Sensors; Bestimmen eines Differenzsignals, das die Differenz zwischen dem Eingangssignal und dem Steuersignal angibt; und Regeln des Eingangssignals mittels des Differenzsignals. Hierbei weist eine Übertragungsfunktion des Differenzsignals eine Nullstelle bei einer Betriebsfrequenz des Sensors ungleich null auf.

Durch diese Ausgestaltungen wird der Fehler zwischen dem Eingangssignal und dem Steuersignal, d.h. das Differenzsignal, bei der Betriebsfrequenz des anzusteuernden Sensors null, da die Übertragungsfunktion des Differenzsignals dort eine Nullstelle aufweist. Die Betriebsfrequenz kann hier gleich der Resonanzfrequenz des Sensors sein. Einer Verzerrung der Ansteuerung des Sensors durch Quantisierungsfehler nahe seiner Betriebs- oder Resonanzfrequenz wird dadurch entgegengewirkt und ein genauer, verlässlicher Betrieb des Sensors kann somit sichergestellt werden.

Des Weiteren ergibt sich eine deutlich verbesserte Sensorlinearität, vor allem für kleine Signale.

Zudem können Sensoren fehlerfrei angesteuert werden, deren Betriebsfrequenz ungleich null ist. Dies ist zum Beispiel für Drehratensensoren der Fall, in denen ein Schwingkörper innerhalb des Drehratensensors für eine durchzuführende Messung eine Schwingung bei einer von null verschiedenen Betriebsfrequenz ausführt.

In einer Weiterbildung ist der Sensor ein kapazitiver Sensor. Dadurch kann der Sensor präzise allein mittels elektrischer Signale gesteuert und ausgelesen werden.

In einer Weiterbildung ist der Sensor ein mikromechanischer Drehratensensor, etwa ein Mikro-Elektro-Mechanischer-Sensor (MEMS). Da mikromechanische Drehratensensoren eine von null verschiedene Grundschwingung benötigen, um eine Drehrate zu messen, können auch mikromechanische Drehratensensoren ohne Quantisierungsfehler angesteuert werden.

In einer Weiterbildung kann der Sensor in einem Bandpassband um seine Betriebsfrequenz betrieben werden. Die Bereiche des Frequenzspektrums, in denen die Frequenz sich deutlich von der Betriebsfrequenz unterscheidet und in denen sich der Quantisierungsfehler deshalb wesentlich von null unterscheidet, werden durch einen Bandpassfilter gedämpft. Somit wird der Quantisierungsfehler im ganzen Frequenzbereich reduziert und die Verlässlichkeit und Genauigkeit des Sensors erhöht.

In einer Weiterbildung weist die Wandlereinheit einen Digital/Analog-Wandler auf. Des Weiteren ist das Eingangssignal ein digitales Signal und das Steuersignal ein analoges Signal. Es werden digital berechnete Steuerparameter in analoge Steuersignale umgewandelt und zum Sensor übertragen, während Quantisierungsfehler die durch die Digital/Analog-Wandlung entstehen reduziert werden. Dies erhöht die Verlässlichkeit und Genauigkeit des Sensors.

Die Wandlereinheit kann geeignet sein, anhand des Eingangssignals eine Wurzelberechnung durchzuführen, um, wie bereits erläutert, im Sensor möglichst exakte elektrostatische Rückstellkräfte zu erzeugen. Der Quantisierungsfehler einer zur Ansteuerung des Sensors nötige Wurzelberechnung wird dann reduziert.

Erfindungsgemäß erzeugt die Reglereinheit die Übertragungsfunktion durch Verarbeiten des Differenzsignals und Rückführen des verarbeiteten Differenzsignals zum Eingangssignal. Die Nullstelle in der Übertragungsfunktion des Differenzsignals wird dann durch einen einfachen Aufbau generiert. Die Übertragungsfunktion wird gemäß dieser Weiterbildung allein durch eine Verarbeitung des Differenzsignals, also des Quantisierungsfehlers verändert. Dies kann auf verschiedene Weisen, z.B. durch Einbringen von verschiedenen Registern und Multiplikationseinheiten in die Reglereinheit, geschehen.

Insbesondere können durch die verschiedenen Register und/oder Multiplikationseinheiten zusätzliche Terme in der Übertragungsfunktion des Differenzsignals erzeugt werden, die zur Entstehung und/oder Verschiebung von Nullstellen der Übertragungsfunktion führen. Dadurch kann das Übertragungsverhalten des Differenzsignals und damit der Quantisierungsfehler flexibel und einfach gestaltet werden.

Es ist insbesondere auch möglich, Übertragungsfunktionen zu generieren, die mehr als eine Nullstelle aufweisen, und deshalb eine von Quantisierungsfehlern freie Ansteuerung eines Sensors bei verschiedenen Frequenzen ermöglichen.

Die Übertragungsfunktion des Differenzsignals $G_E(z)$ kann die folgende Gleichung erfüllen:

$$G_E(z) = 1 - 2\,z^{-1}\cos(\omega_0 T) + z^{-2},$$

mit $z = e^{i\omega T}$, $\omega_0$ der Betriebskreisfrequenz, $T$ der Samplingrate des Eingangssignals und $\omega$ der Kreisfrequenz.

Die Übertragungsfunktion wird allein aufgrund des Differenzsignals, zweier Register und einer Multiplikationseinheit erzeugt und die Reglereinheit weist einen einfachen Aufbau auf.

Die Übertragungsfunktion des Differenzsignals kann auch eine Funktion mindestens der dritten Potenz in $z^{-1}$ sein. Dies ermöglicht es eine Vielzahl von Frequenzen quantisierungsfehlerfrei anzusteuern.

Im Folgenden werden anhand der Figuren Ausführungsformen der Erfindung, deren Funktionsweise sowie deren Vorteile beschrieben. Elemente der Ausführungsformen sind miteinander kombinierbar, sofern sie sich nicht ausschließen. Es zeigen:

Fig. 1 eine schematische Darstellung einer Ausführungsform eines kapazitiven Sensors.

Fig. 2A eine schematische Draufsicht auf einen mikromechanischen Teil eines Drehratensensors gemäß einer Ausführungsform.

Fig. 2B eine schematische Querschnittsansicht des mikromechanischen Teils des Drehratensensors aus Fig. 2A.

Fig. 3 ein schematisches Blockschaltbild einer Wandlereinheit, einer Vergleichseinheit und eines Sensors gemäß einer Ausführungsform.

Fig. 4 ein schematisches Blockschaltbild einer Vorrichtung zum Ansteuern eines Sensors gemäß einer Ausführungsform.

Fig. 5A ein schematisches Blockschaltbild eines Regelkreises gemäß einer Ausführungsform.

Fig. 5B ein schematisches Blockschaltbild einer Vorrichtung zum Ansteuern eines Sensors mit dem Regelkreis aus Fig. 5A.

Fig. 6 den Betrag und die Phase einer Übertragungsfunktion eines Differenzsignals gemäß der in Fig. 5A und 5B gezeigten Ausführungsform als Funktionen der Frequenz.

Fig. 7A bis 7F schematische Blockschaltbilder von Regelkreisen gemäß weiterer Ausführungsformen.

Fig. 8 ein Flussdiagramm eines Verfahrens zum Ansteuern eines Sensors gemäß einer Ausführungsform.

Fig. 9A und 9B schematische Darstellungen eines Regelkreises zur Restwertverarbeitung aus dem Stand der Technik.

Fig. 10 den Betrag und die Phase einer Übertragungsfunktion eines Differenzsignals gemäß des in Fig. 9A und 9B gezeigten Standes der Technik als Funktionen der Frequenz.

In den Figuren sind einander entsprechende Bauteile bzw. Bauteilgruppen mit denselben Bezugszeichen gekennzeichnet.

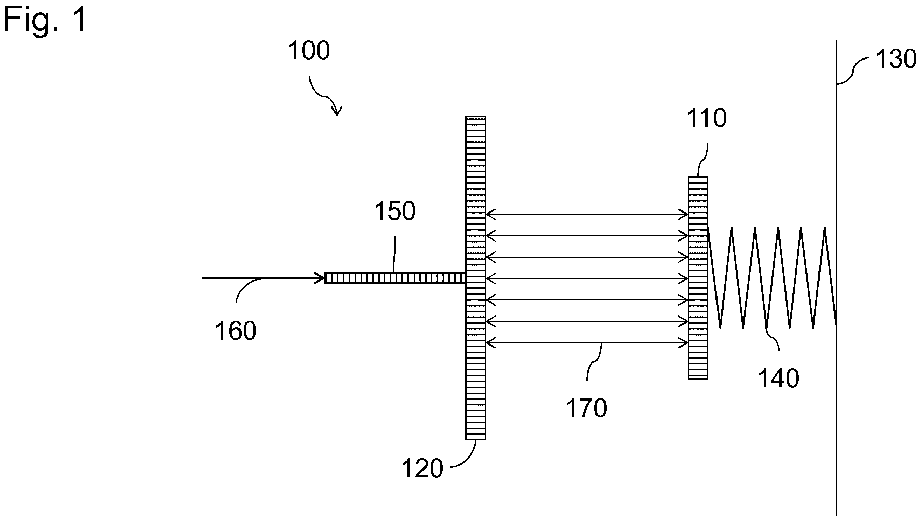

Fig. 1 zeigt eine schematische Darstellung einer Ausführungsform eines kapazitiven Sensors 100. Der kapazitive Sensor 100 weist eine Probemasse 110, eine Kraftgeber- und/oder Sensoreinheit 120, eine Aufhängestruktur 130 und ein Federelement 140 auf.

Die Probemasse 110 ist mittels des Federelements 140 an die Aufhängestruktur 130 gekoppelt. Bei der Probemasse 110 kann es sich zum Beispiel um einen Messfühler handeln. Bei dem Federelement 140 kann es sich, wie in Fig. 1 dargestellt, um eine Feder handeln, es können aber auch andere Ausgestaltungen des Federelements 140 benutzt werden, die eine Bewegung und/oder Schwingung der Probemasse 110 gegenüber der Aufhängestruktur 130 ermöglichen. Zum Beispiel kann das Federelement 140 auch in Form von dünnen Balken oder Drähten ausgebildet sein.

Die Aufhängestruktur 130 ist fest mit einem nicht gezeigten Rahmen des kapazitiven Sensors 100 verbunden. Bei der Aufhängestruktur 130 kann es sich zum Beispiel um eine Wand des kapazitiven Sensors 100 handeln, es kann sich aber auch um Vorsprünge oder ähnliche Aufbauten handeln, die fest mit dem Rahmen des kapazitiven Sensors 100 verbunden sind.

Ähnlich wie die Aufhängestruktur 130 kann auch die Kraftgeber- und/oder Sensoreinheit 120 fest mit einem Rahmen oder einer Wand des kapazitiven Sensors 100 verbunden sein. Die Kraftgeber- und/oder Sensoreinheit 120 kann aber auch mit anderen, nicht gezeigten, beweglichen Elementen des kapazitiven Sensors 100 verbunden sein. Insbesondere können die Kraftgeber- und/oder Sensoreinheit 120 und die Aufhängestruktur 130 einen festen Abstand zueinander aufweisen.

Die Kraftgeber- und/oder Sensoreinheit 120 empfängt über eine elektrische Leitung 150 ein Steuersignal 160, welches dazu führt, dass eine vorgegebene Spannung U zwischen der Kraftgeber- und/oder Sensoreinheit 120 und der Probemasse 110 angelegt wird.

Das Anlegen der Spannung U führt zur Ausbildung eines elektrischen Feldes 170, das eine anziehende Wirkung auf die Probemasse 110 ausübt. Durch diese Wirkung wird das Federelement 140, das die Probemasse 110 mit der Aufhängestruktur 130 verbindet, gedehnt. Die Probemasse 110 bewegt sich auf die Kraftgeber- und/oder Sensoreinheit 120 zu. In diesem Fall fungiert die Kraftgeber- und/oder Sensoreinheit 120 als Kraftgebereinheit. Durch Anlegen einer Spannung kann aber auch z.B. mit Hilfe eines Ladungsverstärkers die Position der Probemasse 110 bezüglich der Kraftgeber- und/oder Sensoreinheit 120 und der Aufhängestruktur 130 bestimmt werden. In diesem Fall fungiert die Kraftgeber- und/oder Sensoreinheit 120 als Sensoreinheit.

Insbesondere kann die Probemasse 110 durch die Kraftgebereinheit 120 in eine bestimmte genau definierte Position gebracht werden, die als Rückstellposition für eine auszuführende Messung dienen kann. Durch das Verwenden von mehreren Kraftgebereinheiten kann die Probemasse 110 in verschiedene Richtungen bewegt werden. Insbesondere ist es möglich die Probemasse 110 durch Anlegen von Wechselspannungen an die Kraftgebereinheiten 120 in eine Schwingung mit einer Betriebskreisfrequenz $\omega_0$ bzw. der Betriebsfrequenz $f_0=\omega_0/2\pi$ zu versetzen. Die Betriebskreisfrequenz $\omega_0$ kann gleich der Resonanzkreisfrequenz des durch Probemasse 110, Federelement 140 und Aufhängestruktur 130 gebildeten Schwingungssystems sein. Auf diese Weise kann durch das Steuersignal 160 eine für Messungen notwendige Schwingung der Probemasse 110 eingestellt werden.

Verändert sich die Position der Probemasse 110 aufgrund einer Messung, wie etwa einer Krafteinwirkung von außen aufgrund z.B. einer Linear- oder Kreisbeschleunigung oder aufgrund einer durch Drehbewegungen hervorgerufenen Corioliskraft, so führt dies zu einer Änderung des elektrischen Feldes 170 und somit zu einer Änderung der Spannung in der Kraftgeber- und/oder Sensoreinheit 120. Diese Spannungsänderung kann über die elektrische Leitung 150 ausgelesen werden und somit ist es möglich, ein Messergebnis über die Positionsänderung der Probemasse 110 aufzunehmen. Alternativ kann auch die Spannung auf bekanntem Niveau gehalten werden. Dann resultiert eine Ladungsänderung, die mittels eines Ladungsverstärkers ausgelesen werden kann, wenn sich die Kapazität der Elektrodenpaare aufgrund eine Bewegung ändert. In beiden Fällen fungiert die Kraftgeber- und/oder Sensoreinheit 120 dann als Sensoreinheit.

Es ist also möglich über die elektrische Leitung 150 sowohl Messdaten aus dem kapazitiven Sensor 100 auszulesen, als auch den kapazitiven Sensor 100 über ein Steuersignal 160 zu steuern.

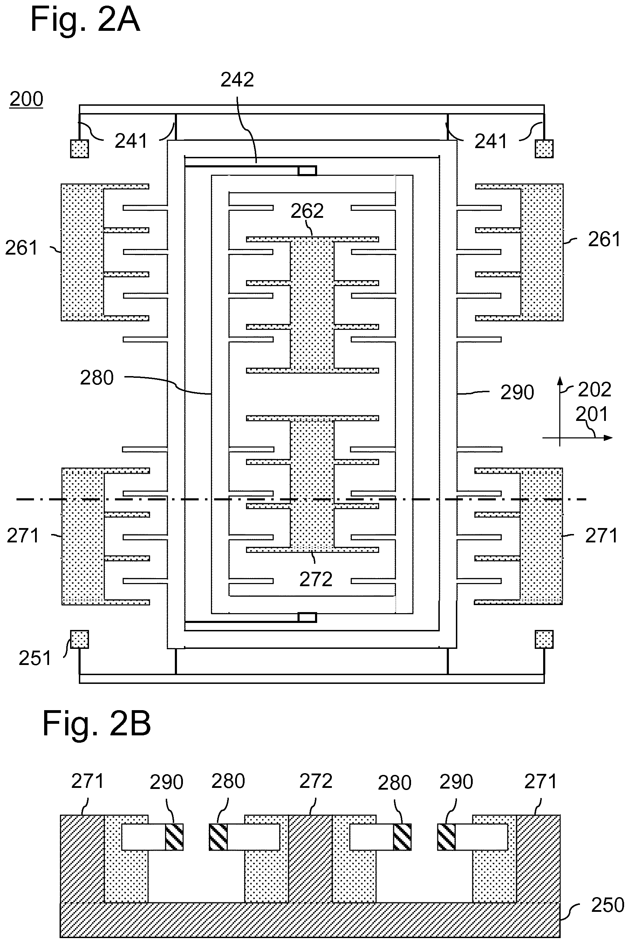

Fig. 2A und 2B zeigen schematische Darstellungen eines mikromechanischen Teils eines Drehratensensors, etwa eines Mikro-Elektro-Mechanischen-Sensors (MEMS), gemäß einer Ausführungsform. Fig. 2B stellt dabei einen Querschnitt des mikromechanischen Teils des Drehratensensors entlang der Strichpunkt-Linie der Fig. 2A dar.

Fig. 2A und 2B beziehen sich auf einen mikromechanischen Drehratensensor 200 gemäß einer Ausführungsform. Der Drehratensensor 200 umfasst eine an ersten Federelementen 241 aufgehängte äußere Probemasse 290, z. B. einen Anregungsrahmen. Die ersten Federelemente 241 koppeln die Probemasse 290 an eine Aufhängestruktur 251, die fest mit einem in der Fig. 2B dargestellten Trägersubstrat 250 verbunden ist. Die Federelemente 241 dämpfen eine Auslenkung der äußeren Probemasse 290 gegenüber dem Trägersubstrat 250 entlang der Anregungsrichtung 201 nur schwach. Über zweite Federelemente 242 ist eine innere Probemasse 280 an die äußere Probemasse 290 gekoppelt und gegenüber der äußeren Probemasse 290 hauptsächlich entlang einer zur Anregungsrichtung 201 orthogonalen Detektionsrichtung 202 beweglich. Anregungs- und Detektionsrichtung 201, 202 verlaufen parallel zu einer Oberfläche des Trägersubstrats 250. Die ersten und zweiten Federelemente 241, 242 sind beispielsweise balkenähnliche Strukturen mit kleinen Querschnitten, die zwischen den jeweils zu koppelnden Strukturen ausgebildet sind.

Gemäß einer Ausführungsform umfasst der Drehratensensor 200 erste Kraftgeber- und/oder Sensoreinheiten 261, 271, z.B. elektrostatische Kraftgeber und Sensoren, die das aus der äußeren Probemasse 290 und der inneren Probemasse 280 gebildete System zu einer Schwingung entlang der Anregungsrichtung 201 anregen und/oder eine entsprechende Auslenkung der äußeren Probemasse 290 zu erfassen vermögen.

Wie oben mit Bezug aus Fig. 1 beschrieben, ist es also möglich, mittels eines Ansteuersignals, das den ersten Kraftgeber- und/oder Sensoreinheiten 261, 271 zugeführt wird, eine Position oder Schwingung der äußeren Probemasse 290 einzustellen oder durch Auslesen eines Signals eine Messung auszuführen.

Der Drehratensensor 200 umfasst ferner zweite Kraftgeber- und/oder Sensoreinheiten 262, 272 z.B. elektrostatische Kraftgeber und Sensoren, die auf die innere Probemasse 280 einzuwirken und/oder deren Auslenkung zu erfassen vermögen. Es ist also möglich mittels eines Steuersignals, das den zweiten Kraftgeber- und/oder Sensoreinheiten 262, 272 zugeführt wird, die Position oder Schwingung der inneren Probemasse 280 einzustellen und Messdaten auszulesen.

Im Betrieb des Drehratensensors 200 regen beispielsweise die ersten Kraftgeber- und Sensoreinheiten 261, 271 die äußere Probemasse 290 zu einer Schwingung mit der Betriebskreisfrequenz $\omega_0$ entlang der Anregungsrichtung 201 an, wobei sich die innere Probemasse 280 näherungsweise mit derselben Amplitude und Phase mit der äußeren Probemasse 290 mit bewegt. Wird die Anordnung um eine zur Substratebene orthogonale Achse gedreht, so wirkt auf die äußere Probemasse 290 und die innere Probemasse 280 eine Corioliskraft, die aufgrund der in diese Richtung steifen Federn 241 nur die innere Probemasse 280 relativ zur äußeren Probemasse 290 in die Detektionsrichtung 202 auslenkt. Die zweiten Kraftgeber- und Sensoreinheiten 262, 272 erfassen die Auslenkung der inneren Probemasse 280 und damit die Drehbewegung um die zur Substratebene orthogonale Achse. Um die oben beschriebene Messung auszuführen, ist es notwendig, die Schwingung der äußeren Probemasse 290 so exakt wie möglich einzustellen, um dann eine Änderung der Schwingung der inneren Probemasse 280, die sich vor Beginn der Messung näherungsweise mit derselben Amplitude und Phase mit der äußeren Probemasse 290 mit bewegt, genau bestimmen zu können. Es ist also nötig, die äußere Probemasse 290 und die innere Probemasse 280 mittels Steuersignalen möglichst exakt anzusteuern. Dabei ist es insbesondere notwendig, Fehler, die bei der Umwandlung von Signalen (Digital/Analog-Umwandlung) entstehen, zu minimieren.

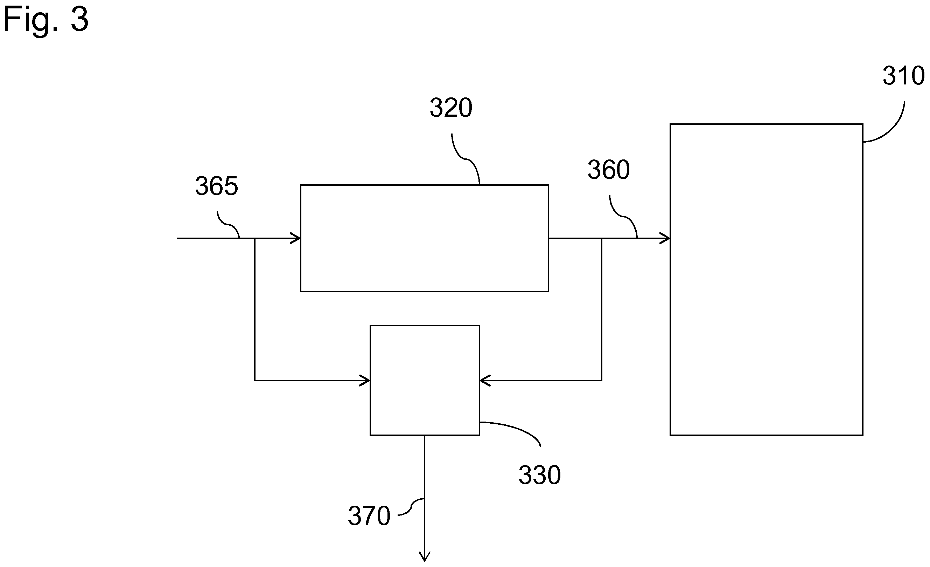

Fig. 3 stellt die Entstehung solcher Fehler in einem schematischen Blockschaltbild dar. Gemäß der in Fig. 3 gezeigten Ausführungsform wird einem Sensor 310 über eine Wandlereinheit 320 ein Steuersignal 360 zugeführt. Dieses Steuersignal 360 wird zur Ansteuerung des Sensors 310 genutzt und kann, wie oben beschrieben, zur Einstellung einer bestimmten Betriebskreisfrequenz $\omega_0$ des Sensors oder zur Positionierung eines Messfühlers innerhalb des Sensors 310 dienen. Die Betriebsfrequenz kann jeden zum Betrieb des Sensors dienlichen Wert annehmen. Insbesondere kann die Betriebsfrequenz ungleich null sein.

Das Steuersignal 360 wird von der Wandlereinheit 320 aus einem Eingangssignal 365 erzeugt. Bei dem Eingangssignal 365 kann es sich zum Beispiel um ein in einer Rechnereinheit, wie z.B. einem Computer, erzeugtes digitales Signal handeln, das von der Wandlereinheit 320 in ein analoges Steuersignal 360 umgewandelt wird. Dann handelt es sich bei der Wandlereinheit 320 um einen Digital/Analog-Wandler. Es ist aber auch möglich, dass ein analoges Eingangssignal 365 von der Wandlereinheit 320 in ein digitales Steuersignal 360 umgewandelt wird. Dann handelt es sich bei der Wandlereinheit um einen Analog/DigitalWandler.

Durch eine Umwandlung eines diskontinuierlichen Signals, z.B. eines digitalen Signals, in ein kontinuierliches Signal, wie sie in der Wandlereinheit 320 vorgenommen wird, können Fehler auftreten. Dies kann zum Beispiel aufgrund einer endlichen Wortbreite (z.B. 16 Bit) der Wandlereinheit 320 geschehen. Es ist aber auch möglich, dass in der Wandlereinheit noch weitere Rechenschritte, wie zum Beispiel Wurzelberechnungen durchgeführt werden. Auch dies kann sich in einem Unterschied zwischen dem Eingangssignal 365 und dem Steuersignal 360 niederschlagen.

Durch solche Fehler entsteht also eine Differenz zwischen dem Eingangssignal 365 und dem Steuersignal 360, die sich in einer fehlerhaften Ansteuerung des Sensors 310 niederschlagen kann. Der Unterschied zwischen dem Steuersignal 360 und dem Eingangssignal 365 kann mittels einer Vergleichseinheit 330 bestimmt werden und als Differenzsignal 370 ausgelesen werden. Das Differenzsignal wird dann benutzt, um das Eingangssignal 365 so zu regeln, dass das Differenzsignal 370 bei einer Betriebsfrequenz des Sensors 310 verschwindet. Mit anderen Worten muss also die Übertragungsfunktion des Differenzsignals 370 eine Nullstelle bei einer Betriebsfrequenz des Sensors 310 aufweisen.

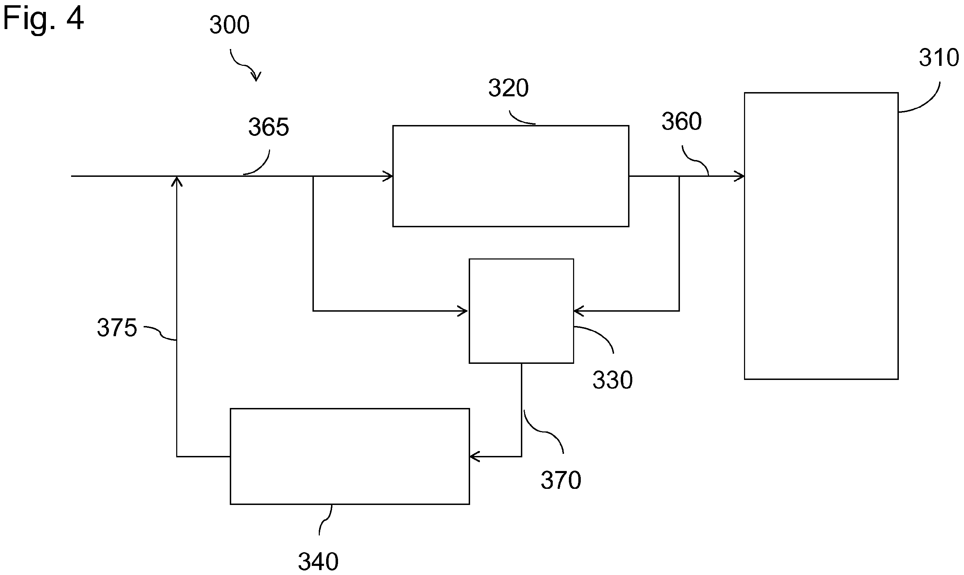

Gemäß einer in Fig. 4 gezeigten Ausführungsform einer Vorrichtung 300 zum Ansteuern des Sensors 310 wird das Differenzsignal 370 einer Reglereinheit 340 zugeführt. In der Reglereinheit 340 wird das Differenzsignal 370 verarbeitet. Die Reglereinheit 340 kann dazu verschiedene Schaltkreise aufweisen. Insbesondere kann die Reglereinheit 340 verschiedene Register zum Speichern von Differenzsignalen 370 zu verschiedenen Zeitpunkten und Multiplikationseinheiten zur Multiplikation von vorgegebenen Funktionen zu den zu bestimmten Zeitpunkten gespeicherten Differenzsignalen 370 aufweisen. Durch diese Schaltungen kann die Reglereinheit 340 das Differenzsignal 370 derart verarbeiten, dass eine Übertragungsfunktion des Differenzsignals eine Nullstelle bei zumindest einer Betriebsfrequenz des Sensors 310 aufweist.

Ein verarbeitetes Differenzsignal oder Reglersignal 375 wird von der Reglereinheit 340 zum Eingangssignal zurückgeführt. Durch dieses Zurückführen wird das Eingangssignal 365 derart verändert, dass das Differenzsignal 370 bei einer Betriebsfrequenz des Sensors 310 gleich Null wird. Dann entspricht das Steuersignal 360 bei der Betriebsfrequenz des Sensors 310 dem Eingangssignal 365. Insbesondere kann die Betriebsfrequenz auch gleich einer Resonanzfrequenz des Sensors sein. Dadurch wird ein Quantisierungsfehler während des Betriebs des Sensors 310 minimal.

Es ist aber auch möglich, Übertragungsfunktionen des Differenzsignals 370 zu generieren, die mehr als eine Nullstelle aufweisen, und somit eine von Fehlern freie Ansteuerung eines Sensors bei verschiedenen Betriebs- und/oder Resonanzfrequenzen ermöglichen.

Gemäß einer weiteren Ausführungsform kann, im Fall dass die Betriebsfrequenz des Sensors 310 von der Resonanzfrequenz des Sensors 310 abweicht, die Reglereinheit 340 so ausgebildet sein, dass das Differenzsignal 370 bei der Resonanzfrequenz des Sensors 310 gleich Null wird. Das heißt, die Übertragungsfunktion des Differenzsignals 370 hat dann eine Nullstelle bei der Resonanzfrequenz des Sensors 310.

Durch diesen Aufbau wird gewährleistet, dass das Steuersignal 360, welches zur Steuerung des Sensors 310 benutzt wird, bei der für den Betrieb des Sensors 310 relevanten Frequenz dem Eingangssignal 365 entspricht und keine Quantisierungsfehler auftreten. Dadurch wird ein genauer und verlässlicher Betrieb des Sensors 310 ermöglicht.

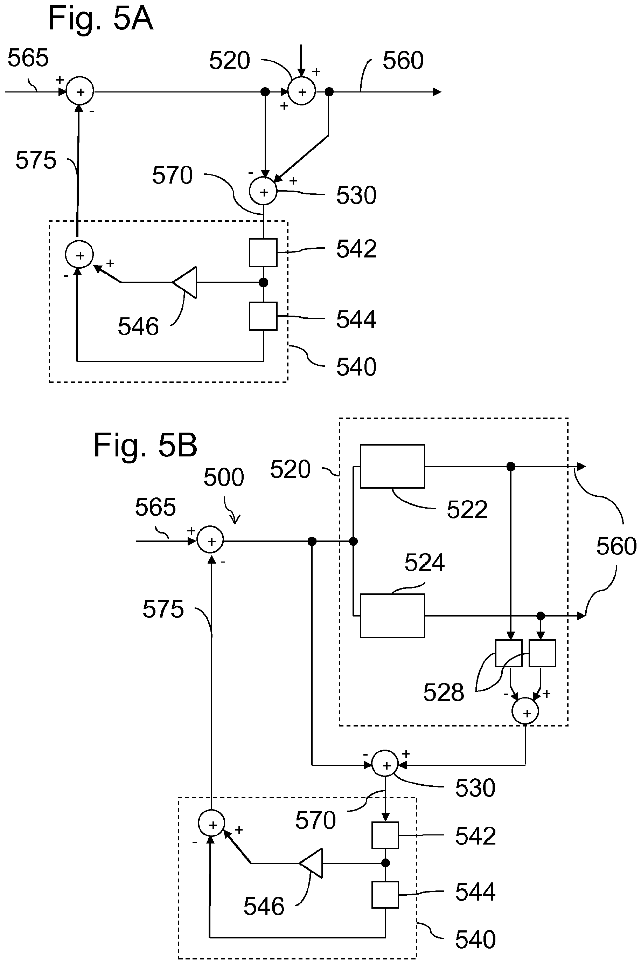

Fig. 5A zeigt ein schematisches Blockschaltbild einer Ausführungsform, die den in Fig. 4 gezeigten Regelkreis aufweist.

In einem ersten Samplingschritt wird ein Eingangssignal 565 mit der Stärke $F_t$ in eine Wandlereinheit 520 eingespeist. Die Wandlereinheit 520 wandelt das Eingangssignal 565 mit der Stärke $F_t$ in ein Steuersignal 560 der Stärke $Y_t = F_t + E_t$ um. Das Steuersignal 560 umfasst also das Eingangssignal 565 mit der Stärke $F_t$ und ein zunächst unbekanntes Differenzsignal 570 mit der Stärke $E_t$. Die Größe des Differenzsignals 570 wird in einer Vergleichseinheit 530 festgestellt und an eine Reglereinheit 540 übermittelt.

In der Reglereinheit 540 wird das Differenzsignal 570 für die Dauer T in einem ersten Register 542 gespeichert, wobei die T die Samplingrate des Eingangssignals 565 ist. Die Samplingrate T kann zum Beispiel $20 \mu s$ betragen. Hierauf (im Zeitschritt t+T) wird das Differenzsignal 570 von dem ersten Register 542 in ein zweites Register 544 geschrieben und dort wiederum für die Dauer T gespeichert.

Gleichzeitig mit dem Übergang vom ersten Register 542 in das zweite Register 544 wird das im ersten Register 542 gespeicherte Differenzsignal 570 der Stärke $E_t$ von einer Multiplikationseinheit 546 mit der Funktion $2\cos(\omega_0 T)$ multipliziert, wobei $\omega_0$ die Betriebsfrequenz des zu steuernden Sensors ist, und vom Eingangssignal 565 subtrahiert.

Im nächsten Zeitschritt (t+2T) wird das im zweiten Register 544 gespeicherte Differenzsignal 570 der Stärke $E_t$ zum Eingangssignal 565 addiert. Gleichzeitig wird ein Signal der Stärke $2\cos(\omega_0 T) E_{t+T}$ vom Eingangssignal 565 abgezogen, das durch Multiplikation des dann im ersten Register 542 gespeicherten Differenzsignal 570 mit der Stärke $E_{t+T}$ mit der Funktion $2\cos(\omega_0 T)$ in der Multiplikationseinheit 546 entsteht. Im Zeitschritt t+2T erreicht also das Signal

$$F_{t+2T} - 2\cos(\omega_0 T) E_{t+T} + E_t$$

die Wandlereinheit 520. Dort wird noch der Quantisierungsfehler des Zeitschritts t+2T hinzu addiert ($E_{t+2T}$), so dass also zur Zeit t+2T als Steuersignal 560 ein Signal mit der Stärke

$$Y_{t+2T} = F_{t+2T} + E_{t+2T} - 2\cos(\omega_0 T)E_{t+T} + E_t$$

ausgegeben wird. Bildet man hiervon die z-Transformierte, so ergibt sich (mit $z = e^{i\omega T}$, T der Samplingrate und $\omega=2\pi f$ der Kreisfrequenz)

$$Y(z) = F(z) + E(z) \, (1 - 2\cos(\omega_0 T)z^{-1} + z^{-2}).$$

Die Übertragungsfunktion $G_E(z)$ des Differenzsignals (d.h. Fehlersignals) 570 zum Ausgang 560 ergibt sich also zu

$$G_E(z) = 1 - 2\cos(\omega_0 T) \, z^{-1} + z^{-2} = 1 - G(z) \text{ mit } G(z) = 2\cos(\omega_0 T) \, z^{-1} - z^{-2}$$

Die Übertragungsfunktion $G_E(z)$ weist eine Nullstelle bei $\omega_0$ auf. Die Darstellung als Differenz 1 - G(z) bereitet weitere Ausführungsformen vor.

Durch geeignetes Wählen von $\omega_0$ kann die Nullstelle der Übertragungsfunktion also über den gesamten Frequenzbereich verschoben werden, insbesondere kann die Kreisfrequenz $\omega_0$ die Betriebskreisfrequenz oder die Resonanzkreisfrequenz sein, falls diese von der Betriebskreisfrequenz verschieden ist.

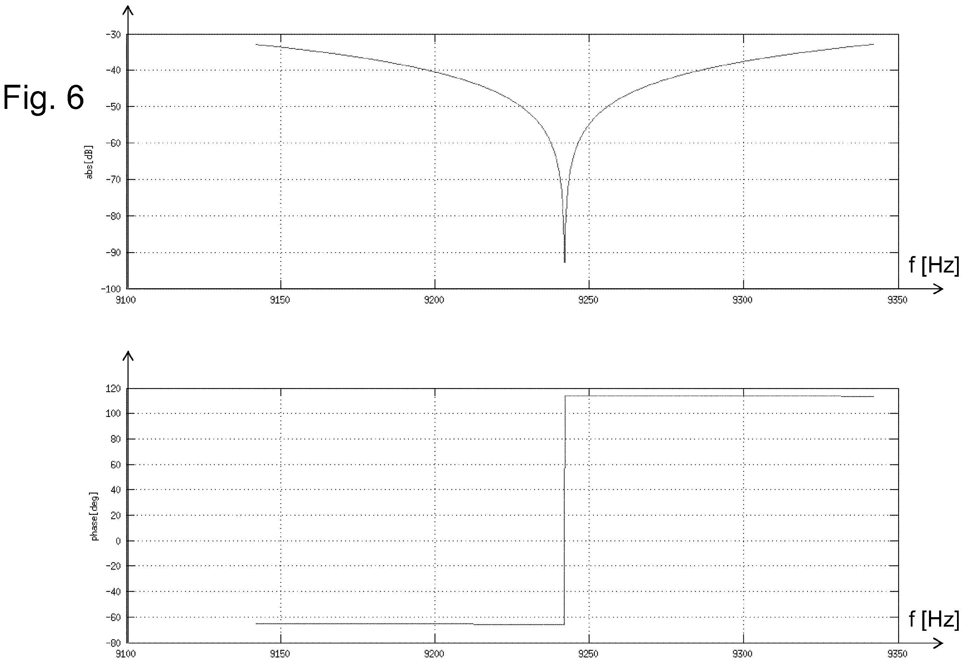

Der Betrag der Übertragungsfunktion $G_E(z)$ ist in Fig. 6 oben dargestellt. Die Phase der Übertragungsfunktion $G_E(z)$ ist in Fig. 6 unten dargestellt. Wie man sieht, ist die Übertragungsfunktion $G_E(z)$ in der Nähe der Frequenz $f_0$ ($\omega_0=2\pi f_0$) stark unterdrückt, so dass dort nur ein geringer Quantisierungsfehler auftritt.

Es ist also möglich, einen Sensor, der bei der Kreisfrequenz $\omega_0$ betrieben wird, derart anzusteuern, dass bei der Kreisfrequenz $\omega_0$ nahezu kein Unterschied zwischen dem von einem Rechner bestimmten Eingangssignal und dem tatsächlich an den Sensor angelegten Steuersignal auftritt.

Dies kann durch die Verwendung eines Bandpasses zusätzlich verstärkt werden, da es mit einem Bandpass möglich ist, Frequenzbereiche abzudämpfen, in denen der Quantisierungsfehler hoch ist. Wählt man zum Beispiel in Fig. 6 zusätzlich einen Bandpass, der nur Frequenzen zwischen 9235 Hz und 9250 Hz zulässt, so ist der Quantisierungsfehler im gesamten relevanten Bereich stark unterdrückt und ein genauer und verlässlicher Betrieb des Sensors möglich.

Fig. 5B zeigt ein schematisches Blockschaltbild einer Ausführungsform einer Vorrichtung 500 zur Ansteuerung eines Sensors mit dem in Fig. 5A schematisch dargestellten Regelkreises.

Insbesondere weist die Wandlereinheit 520 einen Digital/Analog-Wandler mit zwei Wurzelberechnern 522, 524 auf. Diese bilden aus dem Einfangssignal 565 mit der Stärke F Wurzeln $\sqrt{f + \dfrac{F}{2}}$ und $\sqrt{f - \dfrac{F}{2}}$, die hierauf in analoge Steuersignale 560 umgewandelt werden. In Quadriereinheiten 528 werden diese Wurzeln wieder quadriert und hierauf ihre Differenz gebildet, um ein quantisiertes Signal der Stärke $F_Q$ zu erzeugen. Die Differenz der Signale F und $F_Q$ ist das Differenzsignal 570.

Wie mit Bezug auf Fig. 5A beschrieben, wird hierauf in der Vergleichseinheit 530 das Differenzsignal 570 mit der Stärke E bestimmt, das an die Reglereinheit 540 weitergegeben wird. Dort wird es mittels des ersten und zweiten Registers 542, 544 und der Multiplikationseinheit 546 wie oben beschrieben verarbeitet und das so gebildete Reglersignal 575 vom Eingangssignal 565 subtrahiert.

Es ist also möglich, eine zur Steuerung eines Drehratensensors nötige Wurzelberechnung durchzuführen, ohne dass bei der Betriebskreisfrequenz $\omega_0$ des Sensors Quantisierungsfehler auftreten.

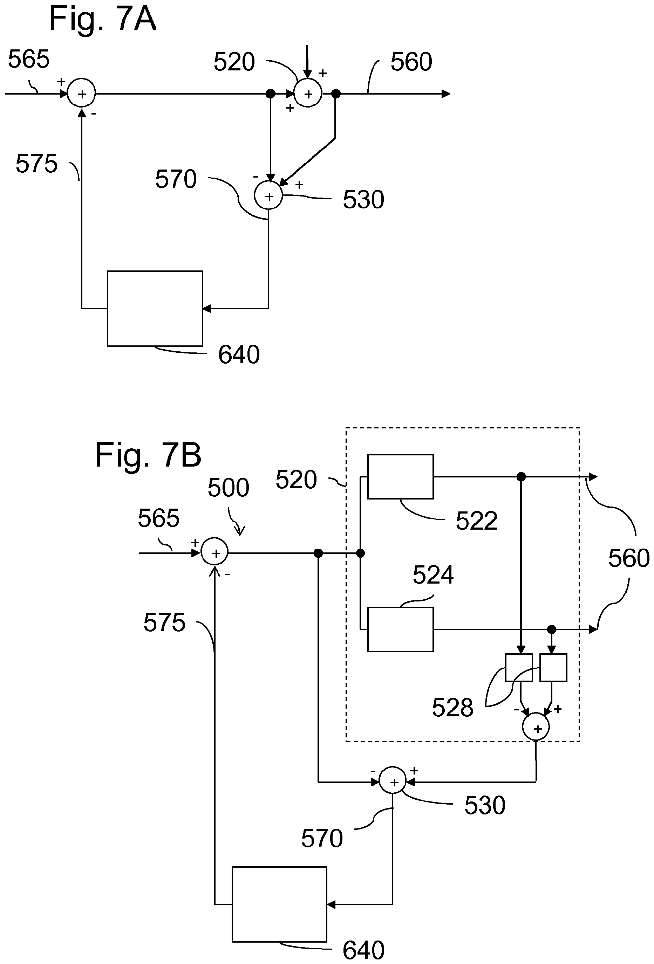

Die Fig. 7A bis 7F zeigen weitere Ausführungsformen von Vorrichtungen zum Ansteuern eines Sensors. Die Ausführungsformen der Fig. 7A bis 7F unterscheiden sich dabei nur in ihrer Reglereinheit 640 von der oben mit Bezug auf die Fig. 5A und 5B diskutierten Ausführungsform.

Die Reglereinheit 540 der in den Fig. 5A und 5B dargestellten Ausführungsform erzeugt eine Übertragungsfunktion G(z) in der zweiten Potenz von $z^{-1}$. Durch geeignete Wahl der verschiedenen Schaltelemente der Reglereinheit 640 ist es aber auch möglich, Übertragungsfunktionen zu erzeugen, die höhere als die zweite Potenz von $z^{-1}$ aufweisen. Auch die sich damit ergebenden Übertragungsfunktionen $G_E(z) = 1 - G(z)$ weisen Nullstellen bei Frequenzen ungleich null auf und sind deshalb geeignet, einen Drehratensensor ohne Quantisierungsfehler zu steuern.

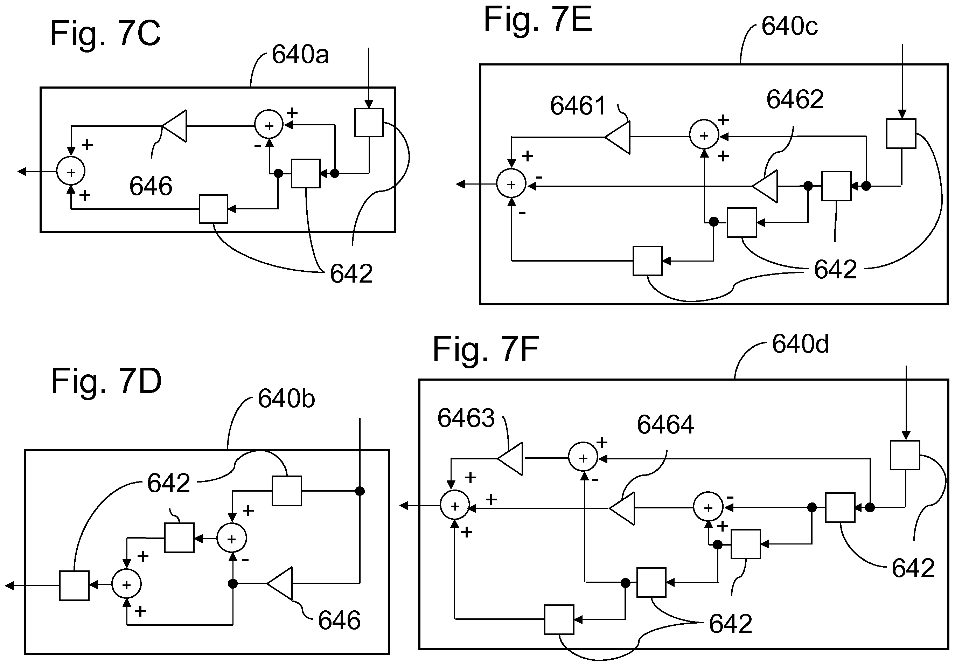

Die Reglereinheiten 640a und 640b der Fig. 7C und 7D weisen jeweils drei Register 642 und einen Multiplizierer 646 auf, der das eingehende Signal mit $(1+2\cos(\omega_0 T))$ multipliziert. Durch die entsprechend den Fig. 7C und 7D vorgenommene Verschaltung mit Addierern und Subtrahierern erzeugen beide Reglereinheiten 640a und 640b die Übertragungsfunktion

$$G(z) = z^{-1}(1+2\cos(\omega_0 T)))-z^{-2}(1+2\cos(\omega_0 T))+z^{-3}.$$

Wie man sich leicht überzeugt weist dann $G_E(z) = 1 - G(z)$ Nullstellen bei $\omega=0$ und $\omega=\omega_0$ auf. Die Reglereinheiten 640a und 640b sind also zur quantisierungsfehlerfreien Ansteuerung von Sensoren mit den Kreisfrequenzen 0 und $\omega_0$ geeignet.

Die in der Fig. 7E gezeigte Reglereinheit 640c weist vier Register 642 auf, die mit einem ersten Multiplizierer 6461 und einem zweiten Multiplizierer 6462 mittels Addierern und Subtrahierern verbunden sind. Der Multiplizierer 6461 multipliziert dabei das eingehende Signal mit $2(\cos(\omega_1 T)+\cos(\omega_1 T))$, während der Multiplizierer 6462 das eingehende Signal mit $2(1+\cos(\omega_1 T)\cos(\omega_2 T))$ multipliziert. Dadurch wird in der Reglereinheit 640c eine Übertragungsfunktion in der vierten Potenz in $z^{-1}$ erzeugt:

$$G(z) = z^{-1}2(\cos(\omega_1 T)+\cos(\omega_2 T))-z^{-2}2(1+2\cos(\omega_1 T)\cos(\omega_2 T))+z^{-3}2(\cos(\omega_1 T)+\cos(\omega_2 T))-z^{-4}.$$

Die Übertragungsfunktion $G_E(z) = 1 - G(z)$ weist Nullstellen bei den Kreisfrequenzen $\omega_1$ und $\omega_2$ auf und ist somit zur quantisierungsfehlerfreien Ansteuerung von Sensoren geeignet, die mit diesen Frequenzen betrieben werden.

Die in der Fig. 7F gezeigte Reglereinheit 640d weist fünf Register 642 auf, die mit einem dritten Multiplizierer 6463 und einem vierten Multiplizierer 6464 mittels Addierern und Subtrahierern verbunden sind. Der Multiplizierer 6463 multipliziert dabei das eingehende Signal mit $(1+2(\cos(\omega_1 T)+\cos(\omega_2 T)))$, während der Multiplizierer 6464 das eingehende Signal mit $2(1+\cos(\omega_1 T)+\cos(\omega_2 T))+2(1+\cos(\omega_1 T)\cos(\omega_2 T))$ multipliziert. Dadurch wird in der Reglereinheit 640d eine Übertragungsfunktion in der fünften Potenz in $z^{-1}$ erzeugt:

$$G(z) = z^{-1}(1+2(\cos(\omega_1 T)+\cos(\omega_2 T)))-z^{-2}2(1+\cos(\omega_1 T)+\cos(\omega_2 T)+2\cos(\omega_1 T)\cos(\omega_2 T))$$
$$+z^{-3}2(1+\cos(\omega_1 T)+\cos(\omega_2 T)+2\cos(\omega_1 T)\cos(\omega_2 T))-z^{-4}(1+(2\cos(\omega_1 T)+\cos(\omega_2 T))+z^{-5}.$$

Die Übertragungsfunktion $G_E(z) = 1 - G(z)$ weist Nullstellen bei den Kreisfrequenzen 0, $\omega_1$ und $\omega_2$ auf und ist somit zur quantisierungsfehlerfreien Ansteuerung von Sensoren geeignet, die mit diesen Frequenzen betrieben werden.

In ähnlicher Weise können durch die Verwendung von mehreren Registern und von entsprechend gewählten Multiplizierern Reglereinheiten realisiert werden, die Übertragungsfunktionen in höheren Potenzen von $z^{-1}$ generieren und somit eine höhere Anzahl von Nullstellen aufweisen. Typischerweise sind solche Übertragungsfunktionen durch verschiedene Schaltungen realisierbar, wie zum Beispiel für die Funktionen dritter Ordnung in $z^{-1}$ anhand der Fig. 7C und 7D gezeigt.

Es ist somit möglich mittels geeigneter Wahl einer Reglereinheit Übertragungsfunktionen zu erzeugen, die zur quantisierungsfehlerfreien Ansteuerung von Sensoren bei einer beliebigen Anzahl von Frequenzwerten geeignet sind.

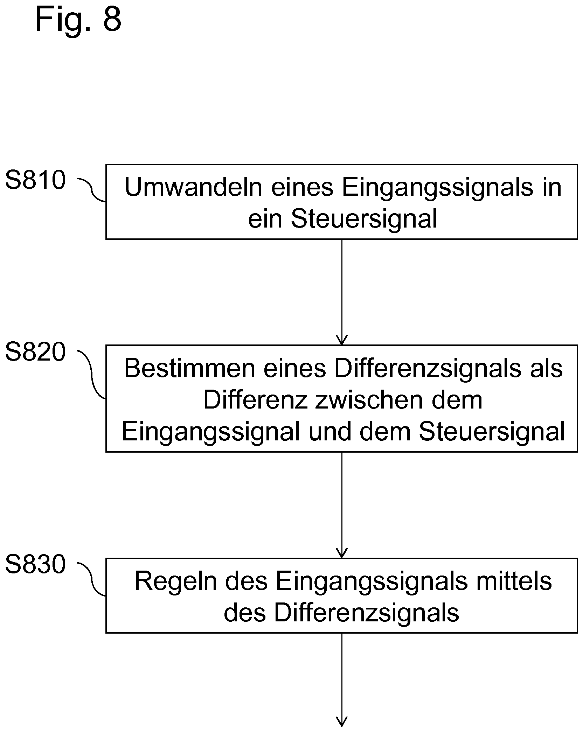

Fig. 8 zeigt ein Flussdiagramm eines Verfahrens zum Ansteuern eines Sensors gemäß einer Ausführungsform.

Bei S810 wird ein Eingangssignal in ein Steuersignal umgewandelt.

Bei S820 wird ein Differenzsignal als Differenz zwischen dem Eingangssignal und dem Steuersignal bestimmt.

Bei S830 wird das Eingangssignal mittels des Differenzsignals geregelt. Das Eingangssignal wird daraufhin wieder in ein Steuersignal umgewandelt, wodurch ein geschlossener Regelkreis entsteht.

Insbesondere wird durch das beschriebene Verfahren eine Übertragungsfunktion des Differenzsignals (d.h.

Fehlersignals) bei einer Betriebsfrequenz eines anzusteuernden Sensors gleich Null, d.h. die Übertragungsfunktion hat eine Nullstelle bei der Betriebsfrequenz des Sensors. Diese Betriebsfrequenz ist erfindungsgemäß ungleich Null.

Des Weiteren kann ein digitales Eingangssignal in ein analoges Steuersignal umgewandelt werden, und das Umwandeln des Eingangssignals kann eine Wurzelberechnung aufweisen.

Die Übertragungsfunktion mit einer Nullstelle bei einer Betriebsfrequenz des Sensors wird erfindungsgemäß durch ein Verarbeiten des Differenzsignals (d.h. Fehlersignals) und ein Rückführen des verarbeiteten Differenzsignals zum Eingangssignal generiert, wie zum Beispiel oben mit Bezug auf die Fig. 5A bis 7F beschrieben. Insbesondere kann die Übertragungsfunktion des Differenzsignals eine der oben beschriebenen Gleichungen erfüllen.

## Patentansprüche

1. Vorrichtung (300) zum Ansteuern eines Sensors (310), mit
   einer Wandlereinheit (320) zum Umwandeln eines Eingangssignals (365) in ein Steuersignal (360) zum Steuern des Sensors (310);
   einer Vergleichseinheit (330) zum Bestimmen eines Differenzsignals (370), das die Differenz zwischen dem Eingangssignal (365) und dem Steuersignal (360) angibt; und
   einer Reglereinheit (340) zum Regeln des Eingangssignals (365) mittels des Differenzsignals (370), wobei
   die Reglereinheit (340) eine Übertragungsfunktion des Differenzsignals (370) durch Verarbeiten des Differenzsignals (370) und Rückführen des verarbeiteten Differenzsignals (375) zum Eingangssignal (365) erzeugt;
   die Übertragungsfunktion des Differenzsignals (370) eine Nullstelle bei einer Betriebsfrequenz des Sensors (310) aufweist; und
   die Betriebsfrequenz ungleich null ist.

2. Vorrichtung (300) nach Anspruch 1, wobei der Sensor (310) ein kapazitiver, mikromechanischer Drehratensensor (200) ist.

3. Vorrichtung (300) nach einem der vorigen Ansprüche, wobei
   der Sensor (310) in einem Bandpassband um seine Betriebsfrequenz betrieben wird.

4. Vorrichtung (300) nach einem der vorigen Ansprüche, wobei
   die Wandlereinheit (320) einen Digital/Analog-Wandler aufweist,
   das Eingangssignal (365) ein digitales Signal ist; und
   das Steuersignal (360) ein analoges Signal ist.

5. Vorrichtung (300) nach einem der vorigen Ansprüche, wobei die Wandlereinheit (320) basierend auf dem Eingangssignal (365) eine Wurzelberechnung durchführt.

6. Vorrichtung (500) nach einem der vorigen Ansprüche, wobei
   die Übertragungsfunktion des Differenzsignals (570) folgende Gleichung erfüllt:

$$G_E(z) = 1 - 2\,z^{-1}\cos(\omega_0 T) + z^{-2}$$

   mit $G_E(z)$ der Übertragungsfunktion des Differenzsignals (570), $z = e^{i\omega T}$, $\omega_0$ der Betriebskreisfrequenz, $T$ der Samplingrate des Eingangssignals (565) und $\omega$ der Kreisfrequenz.

7. Vorrichtung nach einem der Ansprüche 1 bis 5, wobei
   die Übertragungsfunktion des Differenzsignals eine Funktion mindestens der dritten Potenz in $z^{-1}$ ist, mit $z = e^{i\omega T}$, $T$ der Samplingrate des Eingangssignals und $\omega$ der Kreisfrequenz.

8. Verfahren zum Ansteuern eines Sensors (310) mit den Schritten:

   Umwandeln eines Eingangssignals (365) in ein Steuersignal (360) zum Steuern des Sensors (310);
   Bestimmen eines Differenzsignals (370), das die Differenz zwischen dem Eingangssignal (365) und dem Steuersignal (360) angibt; und
   Regeln des Eingangssignals (365) mittels des Differenzsignals (370), wobei

das Regeln des Eingangssignals (365) Erzeugen einer Übertragungsfunktion des Differenzsignals (370) durch Verarbeiten des Differenzsignals (370) und Rückführen des verarbeiteten Differenzsignals (375) zum Eingangssignal (365) aufweist;

die Übertragungsfunktion des Differenzsignals (370) eine Nullstelle bei einer Betriebsfrequenz des Sensors (310) aufweist; und

die Betriebsfrequenz ungleich null ist.

9. Verfahren nach Anspruch 8, wobei

das Eingangssignal (365) ein digitales Signal ist; und

das Steuersignal (360) ein analoges Signal ist.

10. Verfahren nach einem der Ansprüche 8 bis 9, wobei das Umwandeln des Eingangssignals (365) eine Wurzelberechnung aufweist.

11. Verfahren nach einem der Ansprüche 8 bis 10, wobei

die Übertragungsfunktion des Differenzsignals (570) folgende Gleichung erfüllt:

$$G_E(z) = 1 - 2\, z^{-1}\, \cos(\omega_0 T) + z^{-2}$$

mit $G_E(z)$ der Übertragungsfunktion des Differenzsignals (570), $z = e^{1\omega T}$, $\omega_0$ der Betriebskreisfrequenz, T der Samplingrate des Eingangssignals (565) und $\omega$ der Kreisfrequenz.

12. Verfahren nach einem der Ansprüche 8 bis 10, wobei

die Übertragungsfunktion des Differenzsignals eine Funktion mindestens der dritten Potenz in $z^{-1}$ ist, mit $z = e^{1\omega T}$. T der Samplingrate des Eingangssignals und $\omega$ der Kreisfrequenz.

**Claims**

1. A device (300) for controlling a sensor (310), comprising

a converter unit (320) for converting an input signal (365) into a control signal (360) for controlling the sensor (310);

a comparison unit (330) for determining a difference signal (370) that indicates the difference between the input signal (365) and the control signal (360); and

a control unit (340) for controlling the input signal (365) by means of the difference signal (370), wherein

the control unit (340) generates a transfer function of the difference signal (370) by processing the difference signal (370) and by feeding back the processed difference signal (375) to the input signal (365);

the transfer function of the difference signal (370) has a zero point at an operating frequency of the sensor (310); and

the operating frequency is different from zero.

2. The device (300) according to claim 1, wherein the sensor (310) is a capacitive micro-mechanical rotation rate sensor (200).

3. The device (300) according to one of the preceding claims, wherein

the sensor (310) is operated in a bandpass band around its operating frequency.

4. The device (300) according to one of the preceding claims, wherein

the converter unit (320) comprises a digital/analog converter,

the input signal (365) is a digital signal; and

the control signal (360) is an analog signal.

5. The device (300) according to one of the preceding claims, wherein the converter unit (320) performs based on the input signal (365) a calculation of a root.

6. The device (500) according to one of the preceding claims, wherein

the transfer function of the difference signal (570) satisfies the following equation:

$$G_E(z) = 1 - 2\, z^{-1}\, \cos(\omega_0 T) + z^{-2}$$

with $G_E(z)$ the transfer function of the difference signal (570), $z = e^{i\omega T}$, $\omega_0$ the operating angular frequency, T the sampling rate of the input signal (565) and $\omega$ the angular frequency.

**7.** The device according to one of claims 1 to 5, wherein
the transfer function of the difference signal is a function in at least the third power of $z^{-1}$, with $z = e^{i\omega T}$, T the sampling rate of the input signal, and $\omega$ the angular frequency.

**8.** A method for controlling a sensor (310) comprising the steps:

converting an input signal (365) to a control signal (360) for controlling the sensor (310);
determining a difference signal (370) that indicates the difference between the input signal (365) and the control signal (360); and
controlling the input signal (365) by means of the difference signal (370),

wherein

controlling the input signal (365) comprises generating a transfer function of the difference signal (370) by processing the difference signal (370) and by feeding back the processed difference signal (375) to the input signal (365);
the transfer function of the difference signal (370) comprises a zero point at an operating frequency of the sensor(310); and
the operating frequency is different from zero.

**9.** The method according to claim 8, wherein
the input signal (365) is a digital signal; and
the control signal (360) is an analog signal.

**10.** The method according to one of claims 8 to 9, wherein converting the input signal (365) comprises a calculation of a root.

**11.** The method according to one of claims 8 to 10, wherein
the transfer function of the difference signal (570) satisfies the following equation:

$$G_E(z) = 1 - 2\, z^{-1}\, \cos(\omega_0 T) + z^{-2}$$

with $G_E(z)$ the transfer function of the difference signal (570), $z = e^{i\omega T}$, $\omega_0$ the operating angular frequency, T the sampling rate of the input signal (565) and $\omega$ the angular frequency.

**12.** The method according to one of claims 8 to 10, wherein
the transfer function of the difference signal is a function in at least the third power in $z^{-1}$, with $z = e^{i\omega T}$, T the sampling rate of the input signal, and $\omega$ the angular frequency.

**Revendications**

**1.** Dispositif (300) pour commander un capteur (310), avec
une unité de conversion (320) pour convertir un signal d'entrée (365) en signal de commande (360) pour commander le capteur (310) ;
une unité de comparaison (330) pour définir un signal différentiel (370) qui indique la différence entre le signal d'entrée (365) et le signal de commande (360) ; et
une unité de régulation (340) pour réguler le signal d'entrée (365) à l'aide du signal différentiel (370),
l'unité de régulation (340) générant une fonction de transmission du signal différentiel (370) en traitant celui-ci et en ramenant le signal différentiel traité (375) jusqu'au signal d'entrée (365) ;

la fonction de transmission du signal différentiel (370) présentant un point zéro à une fréquence de fonctionnement du capteur (310) ; et
la fréquence de fonctionnement étant différente de zéro.

2. Dispositif (300) selon la revendication 1, le capteur (310) étant un capteur de vitesse de rotation micromécanique capacitif (200).

3. Dispositif (300) selon l'une des revendications précédentes, le capteur (310) fonctionnant dans un passe-bande sur sa fréquence de fonctionnement.

4. Dispositif (300) selon l'une des revendications précédentes,
l'unité de conversion (320) comportant un convertisseur numérique/analogique,
le signal d'entrée (365) étant un signal numérique ; et
le signal de commande (360) étant un signal analogique.

5. Dispositif (300) selon l'une des revendications précédentes, l'unité de conversion (320) effectuant sur la base du signal d'entrée (365) un calcul de racine.

6. Dispositif (500) selon l'une des revendications précédentes,
la fonction de transmission du signal différentiel (570) répondant à l'équation suivante :

$$G_E(z) = 1 - 2z^{-1}\cos(\omega_0 T) + z^{-2}$$

dans laquelle $G_E(z)$ désigne la fonction de transmission du signal différentiel (570), $z = e^{1\omega T}$, $\omega_0$ la fréquence angulaire de fonctionnement, $T$ le taux d'échantillonnage du signal d'entrée (565), et $\omega$ la fréquence angulaire.

7. Dispositif selon l'une des revendications 1 à 5, la fonction de transmission du signal différentiel étant une fonction au moins de troisième puissance dans $z^{-1}$, avec $z = e^{1\omega T}$, $T$ le taux d'échantillonnage du signal d'entrée, et $\omega$ la fréquence angulaire.

8. Procédé pour commander un capteur (310), avec les étapes :

   de conversion d'un signal d'entrée (365) en signal de commande (360) pour commander le capteur (310) ;
   de définition d'un signal différentiel (370) qui indique la différence entre le signal d'entrée (365) et le signal de commande (360) ; et
   de régulation du signal d'entrée (365) à l'aide du signal différentiel (370),

   la régulation du signal d'entrée (365) comportant la production d'une fonction de transmission du signal différentiel (370) en traitant celui-ci et en ramenant le signal différentiel traité (375) jusqu'au signal d'entrée (365) ;
   la fonction de transmission du signal différentiel (370) présentant un point zéro à une fréquence de fonctionnement du capteur (310) ; et
   la fréquence de fonctionnement étant différente de zéro.

9. Procédé selon la revendication 8,
le signal d'entrée (365) étant un signal numérique ; et
le signal de commande (360) étant un signal analogique.

10. Procédé selon l'une des revendications 8 à 9, la conversion du signal d'entrée (365) comportant un calcul de racine.

11. Procédé selon l'une des revendications 8 à 10,
la fonction de transmission du signal différentiel (570) répondant à l'équation suivante :

$$G_E(z) = 1 - 2z^{-1}\cos(\omega_0 T) + z^{-2}$$

dans laquelle $G_E$ désigne la fonction de transmission du signal différentiel (570), $z = e^{1\omega T}$, $\omega_0$ la fréquence angulaire

de fonctionnement, T le taux d'échantillonnage du signal d'entrée (565), et $\omega$ la fréquence angulaire.

12. Procédé selon l'une des revendications 8 à 10,
la fonction de transmission du signal différentiel étant une fonction au moins de troisième puissance dans $z^{-1}$, avec $z = e^{1\omega T}$, et T désignant le taux d'échantillonnage du signal d'entrée, et $\omega$ la fréquence angulaire.

Fig. 1

## Fig. 2A

## Fig. 2B

Fig. 3

Fig. 4

EP 3 268 695 B1

Fig. 5A

Fig. 5B

Fig. 6

Fig. 7A

Fig. 7B

Fig. 7E

640c

6462

6461

642

Fig. 7C

640a

642

646

Fig. 7F

640d

642

6464

6463

642

Fig. 7D

640b

642

646

# Fig. 8

S810 — Umwandeln eines Eingangssignals in ein Steuersignal

S820 — Bestimmen eines Differenzsignals als Differenz zwischen dem Eingangssignal und dem Steuersignal

S830 — Regeln des Eingangssignals mittels des Differenzsignals

# Fig. 9A
## Stand der Technik

# Fig. 9B
## Stand der Technik

Fig. 10
Stand der
Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010061756 A1